(19) Europäisches Patentamt
European Patent Office
Office européen des brevets

(11) **EP 4 703 205 A1**

(12) **EUROPEAN PATENT APPLICATION**
published in accordance with Art. 153(4) EPC

(43) Date of publication:
**04.03.2026 Bulletin 2026/10**

(21) Application number: **24796731.8**

(22) Date of filing: **04.04.2024**

(51) International Patent Classification (IPC):
**B60Q 1/08** *(2006.01)* **B60Q 1/076** *(2006.01)*

(52) Cooperative Patent Classification (CPC):
**B60Q 1/076; B60Q 1/08**

(86) International application number:
**PCT/JP2024/013897**

(87) International publication number:
**WO 2024/224973 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 JP 2023071057**

(71) Applicant: **Koito Manufacturing Co., Ltd.
Shinagawa-ku, Tokyo 141-0001 (JP)**

(72) Inventor: **GOTO, Hiroyasu
Shizuoka-shi, Shizuoka 424-8764 (JP)**

(74) Representative: **Hoffmann Eitle
Patent- und Rechtsanwälte PartmbB
Arabellastraße 30
81925 München (DE)**

(54) **CONTROL DEVICE FOR ACTUATOR, LAMP, AND CALIBRATION METHOD FOR SAME**

(57) A vehicle headlamp (1) includes: a lamp unit (15); an actuator (20) capable of tilting the lamp unit (15) such that an emission direction of light of the lamp unit (15) is inclined in a vertical direction; a sensor (71) that is tilted together with the lamp unit (15) and outputs a signal related to an inclination angle of the lamp unit (15); and a control device (72) that receives the signal from the sensor (71) and controls the actuator (20).

FIG. 1

EP 4 703 205 A1

## Description

Technical Field

The present invention relates to a control device for an actuator, a lamp, and a calibration method for the same.

Background Art

A lamp capable of changing the orientation of a lamp unit by an actuator is known, and Patent Literature 1 below discloses a vehicle headlamp.

A vehicle headlamp of Patent Literature 1 below includes a lamp unit, an actuator, and a control device that controls the actuator. The actuator is capable of tilting the lamp unit such that the emission direction of light of the lamp unit is inclined in a vertical direction, and the control device controls the actuator based on the detection value of an inclination detection device capable of detecting the inclination angle of a vehicle. Therefore, according to the vehicle headlamp, the orientation of the emission direction of light of the lamp unit in the vertical direction can be changed according to the inclination of the vehicle.

[Patent Literature 1] JP 5947947 B2

Summary of Invention

When a lamp is installed, the emission direction of light may be adjusted. For example, in a vehicle headlamp, in general, the orientation of the emission direction of light with respect to a vehicle in a vertical direction is adjusted in calibration in a case where the headlamp is attached to the vehicle, or the like. There is a demand for easily adjusting the orientation of the emission direction of light in the vertical direction.

Therefore, an object of the present invention is to provide a control device for an actuator, a lamp, and a calibration method for the same that can easily adjust the orientation of the emission direction of light in a vertical direction.

In order to accomplish the above object, a control device for an actuator of the present invention is a control device for an actuator capable of tilting a lamp unit such that an emission direction of light is inclined in a vertical direction, wherein the control device receives a signal related to an inclination angle of the lamp unit from a sensor that is tilted together with the lamp unit and outputs the signal, and controls the actuator.

In order to accomplish the above object, a lamp of the present invention includes a lamp unit; an actuator capable of tilting the lamp unit such that an emission direction of light of the lamp unit is inclined in a vertical direction; a sensor that is tilted together with the lamp unit and outputs a signal related to an inclination angle of the lamp unit; and a control device that receives the signal and controls the actuator.

In the control device for the actuator, and the lamp, the signal related to the inclination angle of the lamp unit is input from the sensor tilted together with the lamp unit to the control device, and thus the degree of inclination of the emission direction of light of the lamp unit with respect to the horizontal can be detected by the signal from the sensor. Therefore, according to the control device for the actuator, and the lamp, the control device controls the actuator based on the signal input from the sensor to tilt the lamp unit, so that orientation of the emission direction of light in the vertical direction can be set to a predetermined direction. When the lamp unit is a lamp unit for a vehicle headlamp and the lamp is a vehicle headlamp, for example, the control device similarly controls the actuator in a state where a vehicle is arranged on a horizontal road surface or the like, so that the orientation of the emission direction of light with respect to the vehicle in the vertical direction can be set to a predetermined direction. As described above, according to the control device for the actuator, and the lamp, it is possible to easily adjust the orientation of the emission direction of light in the vertical direction.

The sensor may be a triaxial acceleration sensor.

The sensor may be attached to the lamp unit. Alternatively, the actuator may include an output member that rotates about a rotation axis extending in a horizontal direction perpendicular to the emission direction of light and to which the lamp unit is attached, and the sensor may rotate together with the output member.

A calibration method of the present invention is a calibration method for a lamp including a lamp unit, an actuator capable of tilting the lamp unit such that an emission direction of light of the lamp unit is inclined in a vertical direction, a triaxial acceleration sensor that is tilted together with the lamp unit and outputs a signal related to a vector indicating a gravity direction, a memory that stores information related to a reference horizontal vector indicating a horizontal direction parallel to a vertical plane parallel to the emission direction in a coordinate system of the acceleration sensor in a first state where the orientation of the emission direction in the vertical direction is a predetermined direction, and a measurement unit that measures an inclination angle of the emission direction in the vertical plane based on the signal and the information related to the reference horizontal vector, the method including: a first arrangement step of placing the lamp in the first state; a first acquisition step of obtaining information related to a first vector indicating a gravity direction in the coordinate system of the acceleration sensor in the first state; a second arrangement step of bringing the lamp into a second state where the emission direction is inclined by a predetermined angle in the vertical plane from the first state; a second acquisition step of obtaining information related to a second vector indicating a gravity direction in the coordinate system of the acceleration sensor in the second state; a third acquisition step of obtaining information related to a third vector that is included in a plane including the first vector and the second vector and is perpendicular to the first vector; and a storage step of causing the memory to store the information related to the third vector as the information related to the reference horizontal vector.

As described above, the acceleration sensor is tilted together with the lamp unit, and thus the vector indicating the gravity direction and indicated by the signal from the acceleration sensor changes according to the tilt of the lamp unit in the coordinate system of the acceleration sensor. The measurement unit measures the inclination angle of the emission direction of light of the lamp unit based on the signal from the acceleration sensor and the reference horizontal vector. The reference horizontal vector can be obtained from design values of the position and orientation of the acceleration sensor. However, the acceleration sensor may be arranged in a state where the position and orientation of the acceleration sensor deviate from the design values. In this case, a measurement value measured by the measurement unit may include an error due to this deviation. In this calibration method, the information related to the third vector included in a plane including the first vector and the second vector and perpendicular to the first vector is obtained based on the information related to the first vector indicating the gravity direction in the first state and the second vector indicating the gravity direction in the second state. The plane including the first vector and the second vector is a vertical plane parallel to the emission direction of light. Therefore, the third vector included in such a vertical plane and perpendicular to the first vector is the reference horizontal vector. As described above, in this calibration method, the lamp is actually changed from the first state to the second state, and the reference horizontal vector is acquired based on the signal output from the acceleration sensor at that time. Therefore, in this calibration method, the influence of the deviation in the arrangement of the acceleration sensor can be added to the reference horizontal vector. Therefore, according to this calibration method, the inclination angle of the emission direction of light can be more accurately measured.

The memory may further store information related to a reference vertical vector indicating a vertical direction in the coordinate system of the acceleration sensor in the first state, the measurement unit may measure the inclination angle of the emission direction based on the information related to the signal, the reference horizontal vector, and the reference vertical vector, and the storage step may cause the memory to store the information related to the first vector as the reference vertical vector.

Similarly to the reference horizontal vector, the reference vertical vector can be obtained from the design values of the position and orientation of the acceleration sensor. However, when a deviation occurs in the arrangement of the acceleration sensor, the measurement value measured by the measurement unit may include an error caused by the deviation. However, in this calibration method, the information related to the first vector that is the reference vertical vector is obtained and stored in the memory. Therefore, according to this calibration method, the influence of the deviation in the arrangement of the acceleration sensor can be added to the reference vertical vector, and the inclination angle of the emission direction of light can be more accurately measured.

As described above, according to the present invention, it is possible to provide the control device for the actuator, the lamp, and the calibration method for the same that can easily adjust the orientation of the emission direction of light in the vertical direction.

Brief Description of Drawings

[FIG. 1] FIG. 1 is a side view illustrating a lamp according to an embodiment of the present invention.
[FIG. 2] FIG. 2 is a rear view of a lamp unit, a support member, and an actuator.
[FIG. 3] FIG. 3 is a block diagram of a system including the actuator.
[FIG. 4] FIG. 4 is a diagram for explaining a reference vertical vector and a reference horizontal vector.
[FIG. 5] FIG. 5 is a diagram for explaining a method for measuring the inclination angle of the emission direction of light of a measurement unit.
[FIG. 6] FIG. 6 is a flowchart illustrating an example of a calibration method for the lamp of the present embodiment.
[FIG. 7] FIG. 7 is a view illustrating an example of a state during a first arrangement step.
[FIG. 8] FIG. 8 is a diagram for explaining a third vector.
[FIG. 9] FIG. 9 is a view illustrating a lamp according to a modification similarly to FIG. 1.

Description of Embodiments

Hereinafter, preferred embodiments of a control device for an actuator, a lamp, and a calibration method for the same according to the present invention will be described in detail with reference to the drawings. The following exemplary embodiments are intended to facilitate the understanding of the present invention and are not intended to limit the present invention. The present invention can be modified and improved within the scope of the claims without departing from the scope thereof. In the present invention, constituent elements in the following exemplary embodiments may be appropriately combined. In the drawings referred to below, dimensions of each member may be changed for easy understanding. In the drawings, for the sake of clarity, only some of similar components are denoted by reference numerals, and some reference numerals may be omitted.

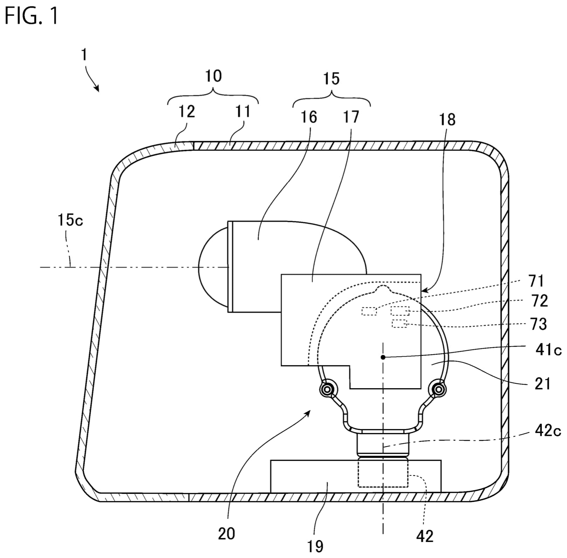

FIG. 1 is a side view illustrating a lamp according to the present embodiment. The lamp of the present embodiment is a vehicle headlamp 1, and is an automobile headlamp. The vehicle headlamp is generally provided in each of left and right directions in front of a vehicle. In the present specification, "right" means a right side in the forward direction of the vehicle, and "left" means a left side in the forward direction of the vehicle. Each of the left and right vehicle headlamps 1 has the same configuration except that the shape is substantially symmetrical in a left-right direction. Therefore, one vehicle headlamp 1 will be described below.

As illustrated in FIG. 1, a vehicle headlamp 1 of the present embodiment includes a housing 10, a lamp unit 15, a support member 19, and an actuator 20 as main components. In FIG. 1, the housing 10 is illustrated in a vertical cross section. The housing 10 includes a lamp housing 11 and a front cover 12. The front of the lamp housing 11 is opened, and the front cover 12 is fixed to the lamp housing 11 so as to close the opening. A space formed by the lamp housing 11 and the front cover 12 is an accommodation space, and the lamp unit 15, the support member 19, and the actuator 20 are accommodated in the accommodation space. The front cover 12 transmits light emitted from the lamp unit 15.

The lamp unit 15 emits light toward the front of the vehicle. In the present embodiment, the lamp unit 15 includes a main body unit 16 and a support unit 17. The main body unit 16 includes a light source (not illustrated) and is configured to emit light of a predetermined light distribution pattern forward. An optical axis 15c is indicated by a two-dot chain line in FIG. 1. A direction toward a side opposite to a lamp unit 15 side along the optical axis 15c is the emission direction of light of the lamp unit 15. The light emitted from the main body unit 16 is emitted to the front of the vehicle via the front cover 12. Examples of the predetermined light distribution pattern include a light distribution pattern of a low beam and a light distribution pattern of a high beam. Note that the configuration of the main body unit 16 is not limited, and the main body unit 16 may be capable of changing the light distribution pattern of the emitted light. Examples of the main body unit 16 include a configuration in which a light source includes a light emitting diode (LED) array.

The support unit 17 is a member that supports the main body unit 16. The support unit 17 of the present embodiment is a heat sink that cools the light source included in the main body unit 16, and the main body unit 16 is fixed over the upper surface and the front surface of the support unit 17. Note that the support unit 17 only needs to be able to support the main body unit 16, and may not be the heat sink.

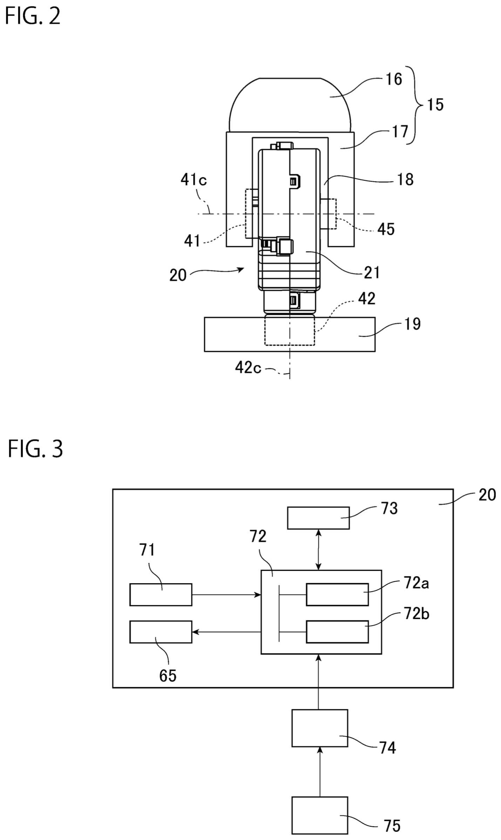

FIG. 2 is a rear view of the lamp unit 15, the support member 19, and the actuator 20. As illustrated in FIG. 2, an internal space 18 that is opened downward from the rear is formed in the support unit 17.

FIG. 3 is a block diagram of a system including the actuator 20. As illustrated in FIGS. 1 to 3, the actuator 20 of the present embodiment includes a housing 21, a first output member 41, a second output member 42, a shaft 45, a sensor 71, a control device 72, a memory 73, and a motor 65.

The first output member 41 rotates about a first rotation axis 41c by the torque of the motor 65, and the second output member 42 rotates about a second rotation axis 42c not parallel to the first rotation axis 41c by the torque of the motor 65. In the present embodiment, the actuator 20 can switch between a state where the first output member 41 rotates and a state where the second output member 42 rotates, and the first output member 41 or the second output member 42 can be rotated by one motor 65. A part of the first output member 41 of the present embodiment protrudes leftward from the housing 21, and the first rotation axis 41c extends in a horizontal direction perpendicular to the optical axis 15c. The second output member 42 of the present embodiment is located below the first output member 41, and a part of the second output member 42 protrudes downward from the housing 21. Then, the second rotation axis 42c extends in a vertical direction, and the first rotation axis 41c and the second rotation axis 42c perpendicularly intersect each other. The shaft 45 of the present embodiment is located on the right side of the first output member 41 and extends along the first rotation axis 41c. A part of the shaft 45 protrudes rightward from the housing 21. The shaft 45 rotates about the first rotation axis 41c together with the first output member 41.

The actuator 20 is arranged so as to be partially located in the internal space 18 of the support unit 17, and the end of the first output member 41 and the end of the shaft 45 are fixed to the support unit 17 of the lamp unit 15. Thus, the actuator 20 is connected to the lamp unit 15. The second output member 42 is fixed to the support member 19. The support member 19 of the present embodiment is a plate-like member fixed to the lamp housing 11, but the support member 19 only needs to support the second output member 42, and for example, a part of the lamp housing 11 may be the support member 19.

In such a vehicle headlamp 1, the first output member 41 and the shaft 45 rotate about the first rotation axis 41c, so that the lamp unit 15 rotates about the first rotation axis 41c. In the present embodiment, as described above, the first rotation axis 41c extends in the horizontal direction perpendicular to the optical axis 15c. Therefore, by the rotation of the first output member 41 and the shaft 45, the optical axis 15c is inclined in a vertical direction in a vertical plane including the optical axis 15c. That is, the actuator 20 tilts the lamp unit 15 such that the emission direction of light is inclined in the vertical direction. The second output member 42 rotates about the second rotation axis 42c, so that the lamp unit 15 rotates about the second rotation axis 42c. In the present embodiment, as described above, the second rotation axis 42c extends in the vertical direction. Therefore, the orientation of the optical axis 15c in the left-right direction is changed by the rotation of the second output member 42. That is, the actuator 20 changes the orientation of the lamp unit 15 in the left-right direction such that the orientation of the emission direction of light in the left-right direction changes.

The sensor 71, the control device 72, and the memory 73 of the present embodiment are mounted on a substrate (not illustrated) housed in the housing 21. The substrate extends in a direction perpendicular to the first rotation axis 41c and rotates about the first rotation axis 41c together with the first output member 41. Therefore, the sensor 71, the control device 72, and the memory 73 are tilted together with the lamp unit 15 when the lamp unit 15 is tilted such that the emission direction of light is inclined in the vertical direction.

The sensor 71 of the present embodiment is a triaxial acceleration sensor, and outputs a signal related to a vector indicating a gravity direction. As described above, the sensor 71 is tilted together with the lamp unit 15, and thus the signal related to the vector indicating the gravity direction and output from the sensor 71 changes according to the tilt of the lamp unit 15 and is a signal related to the inclination angle of the lamp unit 15 in the vertical direction. The emission direction of light is inclined in the vertical direction according to the tilt of the lamp unit 15, and thus the signal from the sensor 71 can be understood as a signal related to the inclination angle of the emission direction of light in the vertical direction.

The control device 72 includes, for example, an integrated circuit such as a microcontroller, an integrated circuit (IC), a large-scale integrated circuit (LSI), or an application specific integrated circuit (ASIC), or a numerical control (NC) device. When the NC device is used, the control device 72 may be one that uses a machine learning device or one that does not use the machine learning device. The control device 72 is electrically connected to the sensor 71, the memory 73, the motor 65, and an electronic control unit (ECU) 74 mounted on the vehicle, and receives a signal output from the sensor 71.

An input unit 75 is electrically connected to the ECU 74. The input unit 75 outputs, as an electric signal, information such as a command and a setting value input according to a user's operation, and the signal from the input unit 75 is input to the control device 72 via the ECU 74. In the present embodiment, the information input to the input unit 75 is information related to the rotation of the first output member 41 and the rotation of the second output member 42 in the actuator 20. Examples of the input unit 75 include a switch group including a plurality of switches, and a touch panel display. The input unit 75 may be connected to the control device 72 without the ECU 74, and the input unit 75 may be detachable.

The memory 73 is configured to be capable of storing information and reading the stored information. The memory 73 is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media except a transitory propagating signal, and does not exclude a volatile recording medium. Note that the memory 73 may be provided inside the control device 72. Various programs for controlling the motor 65 and information necessary for the control are stored in the memory 73, and the control device 72 reads the programs and information stored in the memory 73. The memory 73 stores the information and the like in accordance with an instruction from the control device 72.

The control device 72 of the present embodiment includes a measurement unit 72a and an actuator control unit 72b in a state where the various programs are read from the memory 73.

The measurement unit 72a of the present embodiment measures the inclination angle of the emission direction of light in the vertical plane parallel to the emission direction of light based on the signal related to the vector indicating the gravity direction and input from the sensor 71 and information related to a reference vertical vector and a reference horizontal vector stored in the memory 73. As described above, the emission direction of light is the direction toward the side opposite to the lamp unit 15 side along the optical axis 15c, and thus the inclination angle of the emission direction measured by the measurement unit 72a is the inclination angle of the optical axis 15c in the vertical plane including the optical axis 15c.

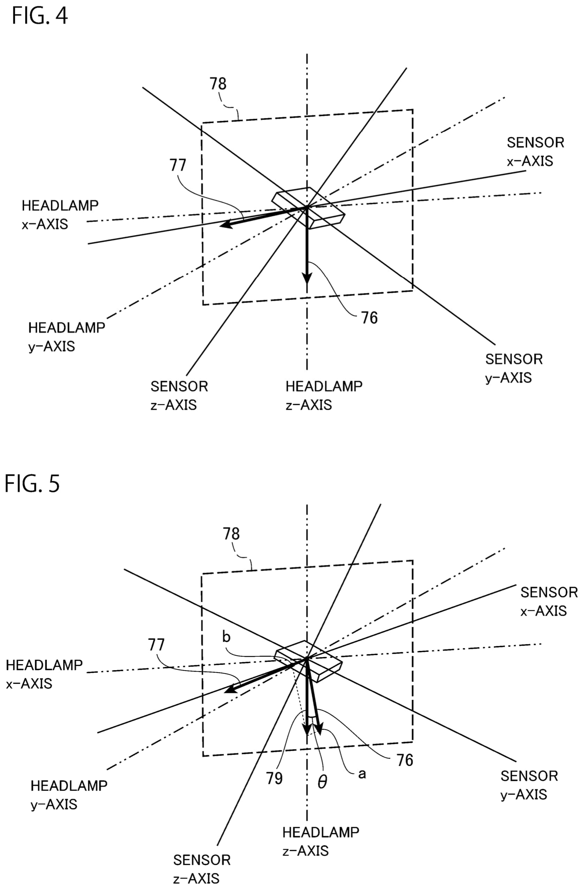

FIG. 4 is a diagram for explaining the reference vertical vector and the reference horizontal vector. In FIG. 4, the coordinate system of the sensor 71 is indicated by solid lines, and the coordinate system of the vehicle headlamp 1 whose origin is the same as the origin of the coordinate system of the sensor 71 is indicated by two-dot chain lines. As illustrated in FIG. 4, the reference vertical vector 76 is the vector indicating the gravity direction in the coordinate system of the sensor 71 in a first state where the orientation of the emission direction of light of the lamp unit 15 in the vertical direction is a predetermined direction. Examples of the first state include, but are not limited to, a state where the emission direction of light is inclined downward by 1.0 degree with respect to a horizontal plane. The reference vertical vector 76 is a unit vector, but the size of the reference vertical vector 76 is not limited. The reference horizontal vector 77 is a vector indicating a horizontal direction parallel to the vertical plane parallel to the emission direction of light in the coordinate system of the sensor 71 in the first state. FIG. 4 illustrates a vertical plane 78 that is parallel to the emission direction of light and passes through the origin of the coordinate system of the sensor 71, and the reference horizontal vector 77 is included in the vertical plane 78. The reference horizontal vector 77 is a unit vector, but the size of the reference horizontal vector 77 is not limited. The vertical plane parallel to the emission direction of light includes the vertical plane parallel to the optical axis 15c and the vertical plane including the optical axis 15c, and thus the reference horizontal vector 77 may be included in the vertical plane including the optical axis 15c.

FIG. 5 is a diagram for explaining a method for measuring the inclination angle of the emission direction of light of the measurement unit 72a, and is a diagram illustrating a vector 79 indicating the gravity direction based on the signal output from the sensor 71 when the optical axis 15c is tilted in the vertical plane including the optical axis 15c from the first state, that is, when the emission direction of light is inclined in the vertical direction from the first state. In FIG. 5, similarly to FIG. 4, the coordinate system of the sensor 71 is indicated by solid lines, and the coordinate system of the vehicle headlamp 1 whose origin is the same as the origin of the coordinate system of the sensor 71 is indicated by two-dot chain lines. As illustrated in FIG. 5, when the emission direction of light is inclined, the coordinate system of the sensor 71 is inclined with respect to the coordinate system of the vehicle headlamp 1, and the reference vertical vector 76 and the reference horizontal vector 77 are also inclined. Then, an angle $\theta$ formed by the vector 79 and the reference vertical vector 76 is the inclination angle of the emission direction of light based on the first state. In the present embodiment, the measurement unit 72a decomposes the vector 79 into a component a in the direction of the reference vertical vector 76 and a component b in the direction of the reference horizontal vector 77. Next, the measurement unit 72a calculates the component a from the inner product of the vector 79 and the reference vertical vector 76, and calculates the component b from the inner product of the vector 79 and the reference horizontal vector 77. Then, when the length of the component a is denoted by |a| and the length of the component b is denoted by |b|, the measurement unit 72a calculates the angle $\theta$ formed by the vector 79 and the reference vertical vector 76 according to the following equation (1).

$$arctan\theta = (|a|/|b|) \ ... \ (1)$$

As described above, the measurement unit 72a of the present embodiment measures the inclination angle of the emission direction of light in the vertical direction, and outputs the signal related to the inclination angle to the actuator control unit 72b. Note that the method for measuring the inclination angle of the emission direction of light of the measurement unit 72a is not limited.

The actuator control unit 72b controls the motor 65 to change the orientation of the lamp unit 15. The actuator control unit 72b of the present embodiment controls the motor 65 based on the signal input from the measurement unit 72a and the signal input from the input unit 75 to rotate the first output member 41 and the second output member 42, and change the orientation of the lamp unit 15, thereby changing the orientation of the emission direction of light in the left-right direction.

Next, a calibration method for the vehicle headlamp 1 will be described.

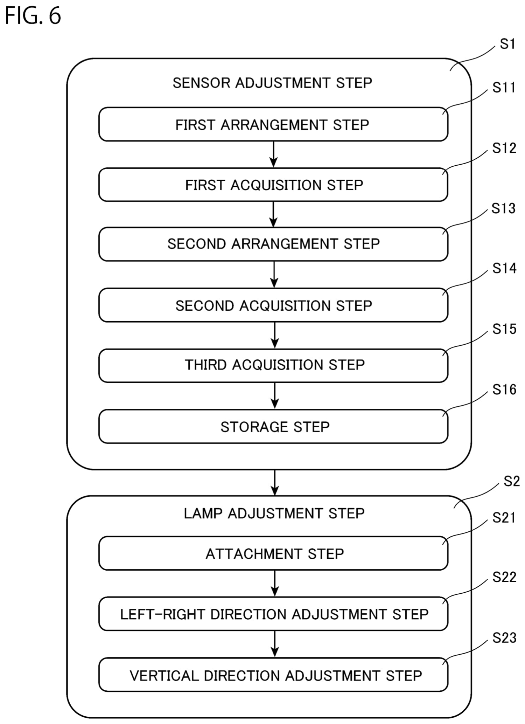

FIG. 6 is a flowchart illustrating an example of the calibration method for the vehicle headlamp 1 of the present embodiment. As illustrated in FIG. 6, the calibration method for the vehicle headlamp 1 of the present embodiment includes a sensor adjustment step S1 and a lamp adjustment step S2.

First, the sensor adjustment step S1 will be described. As illustrated in FIG. 6, the sensor adjustment step S1 includes a first arrangement step S11, a first acquisition step S12, a second arrangement step S13, a second acquisition step S14, a third acquisition step S15, and a storage step S16.

(First Arrangement Step S11)

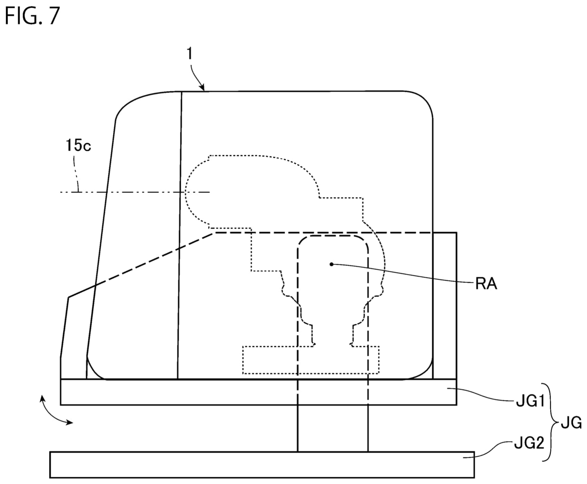

FIG. 7 is a view illustrating an example of a state during this step. This step is a step of bringing the vehicle headlamp 1 into a first state where the orientation of the emission direction of light of the lamp unit 15 in the vertical direction is a predetermined direction. As described above, the first state is, for example, a state where the emission direction of light is inclined downward by 1.0 degree with respect to the horizontal plane. In the present embodiment, as shown in FIG. 7, the vehicle headlamp 1 is brought into the first state using a jig JG. The jig JG of the present embodiment mainly includes a holding unit JG1 and a support unit JG2. The holding unit JG1 is a member capable of holding the vehicle headlamp 1, and is caused to hold the vehicle headlamp 1. Then, light is emitted from the vehicle headlamp 1, and the light is projected on a vertical screen separated by a predetermined distance. The support unit JG2 is a member that supports the holding unit JG1 so as to be rotatable about a reference axis RA. The reference axis RA is an axis that is perpendicular to the optical axis 15c in the vehicle headlamp 1 held by the holding unit JG1 and extends in the horizontal direction, and in the present embodiment, the reference axis RA substantially coincides with the first rotation axis 41c in the actuator 20. Then, the holding unit JG1 is rotated about the reference axis RA to bring the vehicle headlamp 1 into the first state. Whether the vehicle headlamp 1 has entered the first state is determined by, for example, the position of an image of light projected on the vertical screen. When the state where the vehicle headlamp 1 is held by the holding unit JG1 is the first state, the holding unit JG1 is not rotated.

(First Acquisition Step S12)

This step is a step of obtaining information related to a first vector indicating a gravity direction in the coordinate system of the sensor 71 in the first state. In the present embodiment, the measurement unit 72a of the control device 72 obtains the information related to the first vector based on the signal output from the sensor 71 in the first state, and causes the memory 73 to store the information. Note that the first vector is a unit vector, but the size of the first vector is not limited. In the present embodiment, light is emitted from the vehicle headlamp 1 also in this step.

(Second Arrangement Step S13)

This step is a step of bringing the vehicle headlamp 1 into a second state where the emission direction of light is inclined by a predetermined angle in the vertical plane parallel to the emission direction of light from the first state. In the present embodiment, the vehicle headlamp 1 is brought into the second state by rotating the holding unit JG1 about the reference axis RA by a predetermined angle. The predetermined angle is, for example, 5.0 degrees, but is not limited. Whether the vehicle headlamp 1 has entered the second state is determined by, for example, the position of an image of light projected on the vertical screen. Note that the jig JG is only required to be able to hold the vehicle headlamp 1 and to make the held vehicle headlamp 1 in the first state and the second state. For example, the reference axis RA and the first rotation axis 41c may not coincide with each other.

(Second Acquisition Step S14)

This step is a step of obtaining information related to a second vector indicating a gravity direction in the coordinate system of the sensor 71 in the second state. In the present embodiment, similarly to the first acquisition step S12, the measurement unit 72a obtains the information related to the second vector based on the signal output from the sensor 71 in the second state, and causes the memory 73 to store the information. Note that the second vector is a unit vector, but the size of the second vector is not limited. In the present embodiment, light is emitted from the vehicle headlamp 1 also in this step.

(Third Acquisition Step S15)

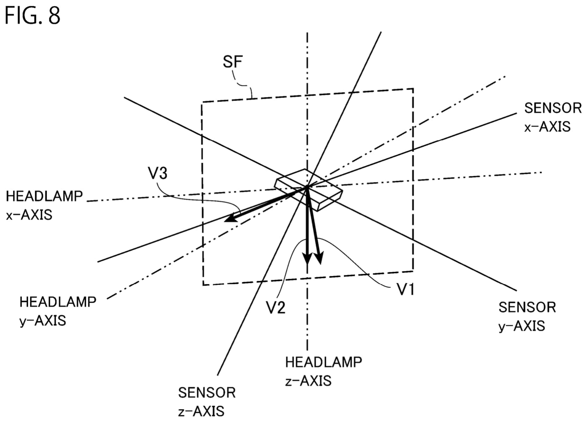

This step is a step of obtaining information related to a third vector. FIG. 8 is a diagram for explaining a third vector V3. FIG. 8 also illustrates the first vector V1 and the second vector V2. In FIG. 8, similarly to FIG. 4, the coordinate system of the sensor 71 is indicated by solid lines, and the coordinate system of the vehicle headlamp 1 whose origin is the same as the origin of the coordinate system of the sensor 71 is indicated by two-dot chain lines. As illustrated in FIG. 8, the third vector V3 is included in a plane SF including the first vector V1 and the second vector V2 and is perpendicular to the first vector V1. In the present embodiment, the measurement unit 72a obtains the information related to the third vector V3 based on the information related to the first vector V1 and the second vector V2 stored in the memory 73. Specifically, the measurement unit 72a calculates an intermediate vector perpendicular to the first vector V1 and the second vector V2 from the outer product of the first vector V1 and the second vector V2, and calculates the third vector V3 from the outer product of the intermediate vector and the first vector V1. Note that a method for calculating the third vector V3 is not limited. In the present embodiment, the third vector V3 is a unit vector, but the size of the third vector V3 is not limited. In the present embodiment, light is emitted from the vehicle headlamp 1 also in this step.

(Storage Step S16)

This step is a step of causing the memory 73 to store the information related to the first vector V1 and the third vector V3 as the information related to the reference vertical vector 76 and the reference horizontal vector 77 described above. In the present embodiment, the measurement unit 72a causes the memory 73 to store the information related to the first vector V1 and the third vector V3 as information related to the reference vertical vector 76 and the reference horizontal vector 77. Then, light from the vehicle headlamp 1 is not emitted. Note that the light from the vehicle headlamp 1 may not be emitted in steps other than the first arrangement step S11 and the second arrangement step S13.

Next, the lamp adjustment step S2 will be described. As illustrated in FIG. 6, the lamp adjustment step S2 includes an attachment step S21, a left-right direction adjustment step S22, and a vertical direction adjustment step S23.

(Attachment Step S21)

This step is a step of attaching the vehicle headlamp 1 to the vehicle.

(Left-Right Direction Adjustment Step S22)

This step is a step of adjusting the orientation of the emission direction of light with respect to the vehicle in the left-right direction. In the present embodiment, first, a vehicle to which the vehicle headlamp 1 is attached is arranged on a horizontal road surface or the like, light is emitted from the vehicle headlamp 1, and the light is projected on a vertical screen separated by a predetermined distance. Next, the input unit 75 is operated to cause the actuator control unit 72b to control the motor 65 of the actuator 20, and the orientation of the lamp unit 15 in the left-right direction is changed by the rotation of the second output member 42 such that the orientation of the emission direction of light with respect to the vehicle in the left-right direction is a predetermined direction. Then, light from the vehicle headlamp 1 is not emitted. Whether the orientation of the emission direction of light in the left-right direction is a predetermined direction is determined by, for example, the position of an image of light projected on the vertical screen.

(Vertical Direction Adjustment Step S23)

This step is a step of adjusting the orientation of the emission direction of light with respect to the vehicle in the vertical direction. Also in this step, similarly to the left-right direction adjusting step S22, the vehicle is arranged on a horizontal road surface or the like. Therefore, it is possible to detect the degree of inclination of the emission direction of light with respect to the horizontal based on the signal related to the inclination angle in the vertical direction of the emission direction of light input from the sensor 71 to the control device 72. In the present embodiment, based on the signal input from the sensor 71, the actuator control unit 72b controls the motor 65 of the actuator 20 to rotate the first output member 41, and tilts the lamp unit 15 such that the emission direction of light is inclined in the vertical direction. Then, the orientation of the emission direction of light in the vertical direction is set to a predetermined direction. Thus, the orientation of the optical axis 15c in the left-right direction and the vertical direction is a predetermined direction, and the emission direction of light in the left-right direction and the vertical direction with respect to the vehicle is a predetermined direction.

As described above, the control device 72 of the present embodiment is the control device for the actuator 20, and the actuator 20 can tilt the lamp unit 15 such that the emission direction of light is inclined in the vertical direction. The control device 72 receives the signal related to the inclination angle of the lamp unit 15 from the sensor 71 that is tilted together with the lamp unit 15 and outputs the signal, and controls the actuator 20. Therefore, the degree of inclination of the emission direction of light with respect to the horizontal can be detected by the signal from the sensor 71. Therefore, the control device 72 of the present embodiment controls the actuator 20 based on the signal input from the sensor 71 to tilt the lamp unit 15, so that the orientation of the emission direction of light in the vertical direction can be set to a predetermined direction. In the present embodiment, the lamp unit 15 is the lamp unit of the vehicle headlamp 1 that emits light toward the front of the vehicle. Therefore, for example, as described in the above-described vertical direction adjustment step S23, in a state where the vehicle is arranged on a horizontal road surface or the like, the control device 72 controls the actuator 20 based on the signal input from the sensor 71 to tilt the lamp unit 15, whereby the orientation of the emission direction of light with respect to the vehicle in the vertical direction can be set to a predetermined direction. As described above, according to the vehicle headlamp 1 of the present embodiment, it is possible to easily adjust the orientation of the emission direction of light in the vertical direction.

The vehicle headlamp 1 of the present embodiment includes the lamp unit 15, the actuator 20, the sensor 71, and the control device 72. Therefore, as described above, the orientation of the emission direction of light in the vertical direction can be set to a predetermined direction. As described above, in a state where the vehicle is arranged on a horizontal road surface or the like, the control device 72 controls the actuator 20 based on the signal input from the sensor 71 to tilt the lamp unit 15, whereby the orientation of the emission direction of light with respect to the vehicle in the vertical direction can be set to a predetermined direction. Therefore, according to the vehicle headlamp 1 of the present embodiment, it is possible to easily adjust the orientation of the emission direction of light with respect to the vehicle in the vertical direction.

The vehicle headlamp 1 of the present embodiment further includes the memory 73 and the measurement unit 72a. The sensor 71 is a triaxial acceleration sensor that outputs a signal related to a vector indicating a gravity direction. The memory 73 stores the information related to the reference vertical vector 76 and the reference horizontal vector 77. The reference vertical vector 76 is a vector indicating the gravity direction in the coordinate system of the sensor 71 in the first state where the orientation of the emission direction of light in the vertical direction is a predetermined direction, and the reference horizontal vector 77 is a vector indicating the horizontal direction parallel to the vertical plane parallel to the emission direction of light in the coordinate system of the sensor 71 in the first state. The measurement unit 72a measures the inclination angle of the emission direction of light in the vertical plane parallel to the emission direction of light based on the signal from the sensor 71 and the information related to the reference vertical vector 76 and the reference horizontal vector 77. Here, the reference vertical vector and the reference horizontal vector can be obtained from design values of the position and orientation of the sensor 71. However, the sensor 71 may be arranged in a state where the position and orientation of the sensor 71 deviate from the design values. In this case, a measurement value measured by the measurement unit 72a may include an error due to this deviation.

As described above, the calibration method for the vehicle headlamp 1 of the present embodiment includes the first arrangement step S11, the first acquisition step S12, the second arrangement step S13, the second acquisition step S14, the third acquisition step S15, and the storage step S16. Then, in the calibration method of the present embodiment, in the first acquisition step S12, the information related to the first vector V1 indicating the gravity direction in the first state is obtained. The first vector V1 is the reference vertical vector 76. In the third acquisition step S15, the information related to the third vector V3 included in the plane SF including the first vector V1 and the second vector V2 and perpendicular to the first vector V1 is obtained based on the information related to the first vector V1 and the second vector V2 indicating the gravity direction in the second state. The plane SF including the first vector V1 and the second vector V2 is the vertical plane 78 parallel to the emission direction of light, and the optical axis 15c is tilted in the vertical plane parallel to the vertical plane 78. Therefore, the third vector V3 included in the vertical plane 78 and perpendicular to the first vector V1 is the reference horizontal vector 77. As described above, in the calibration method of the present embodiment, the vehicle headlamp 1 is actually changed from the first state to the second state, and the reference vertical vector 76 and the reference horizontal vector 77 are acquired based on the signal output from the sensor 71 at that time. Therefore, according to the calibration method of the present embodiment, the influence of the deviation in the arrangement of the sensor 71 can be added to the reference vertical vector 76 and the reference horizontal vector 77, and the inclination angle of the emission direction of light can be more accurately measured.

Although the present invention has been described by taking the above-described embodiment as an example, the present invention is not limited thereto.

For example, in the above embodiment, the actuator 20 including the first output member 41 that rotates about the first rotation axis 41c extending in the horizontal direction perpendicular to the optical axis 15c and to which the lamp unit 15 is attached and the second output member 42 that rotates about the second rotation axis 42c extending in the vertical direction, and rotating the first output member 41 and the second output member 42 by one motor 65 has been described as an example. However, the actuator 20 only needs to be able to tilt the lamp unit 15 such that the emission direction of light is inclined in the vertical direction, and is not limited. For example, the actuator 20 may include a motor that rotates each of the first output member 41 and the second output member 42, and may not include the second output member 42. When the vehicle headlamp 1 includes a support member that supports the lamp unit 15 so as to hang down, the actuator 20 may be configured to include an output member that is connected to the lamp unit 15 and moves in a front-rear direction.

In the above embodiment, the sensor 71 which is the triaxial acceleration sensor has been described as an example. However, the sensor 71 only needs to tilt together with the lamp unit 15 and output the signal related to the inclination angle of the lamp unit 15, and is not limited. The sensor 71 may be, for example, a triaxial gyro sensor, a triaxial geomagnetic sensor, or the like, or may be a sensor in which at least two of a triaxial acceleration sensor, a triaxial gyro sensor, and a triaxial geomagnetic sensor are combined. Note that, when the sensor 71 is different from the triaxial acceleration sensor, the method for calculating the inclination angle of the emission direction of light by the measurement unit 72a is changed according to the type of the sensor.

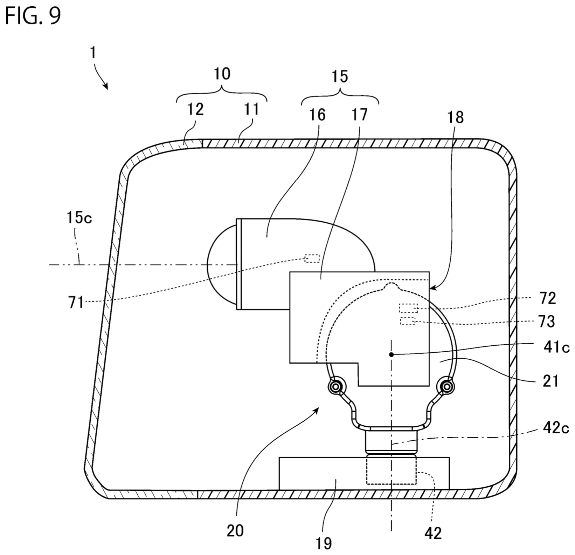

In the above embodiment, the sensor 71 is attached to the substrate that rotates together with the first output member 41. However, the attaching position of the sensor 71 is not limited as long as the sensor is tilted together with the lamp unit 15. FIG. 9 is a view illustrating the vehicle headlamp 1 according to a modification similarly to FIG. 1. For example, as illustrated in FIG. 9, the sensor 71 may be attached to the lamp unit 15.

In the above embodiment, the control device 72 attached to the substrate of the actuator 20 has been described as an example. However, the attaching position of the control device 72 is not limited. For example, the control device 72 may be attached to the housing 10 or may be attached to the vehicle.

In the calibration method of the above embodiment, the measurement unit 72a in the control device 72 of the actuator 20 obtains the information related to the first vector V1, the second vector V2, and the third vector V3. However, another control device electrically connected to the sensor 71 may be prepared, and the another control device may obtain the information related to the first vector V1, the second vector V2, and the third vector V3.

The flowchart of the calibration method of the above embodiment is not limited. For example, the vertical direction adjustment step S23 may be performed before the left-right direction adjustment step S22. The information related to the first vector V1 may be stored in the memory 73 as the information related to the reference vertical vector 76 in the first acquisition step S12, and the information related to the third vector V3 may be stored in the memory 73 as the information related to the reference horizontal vector 77 in the third acquisition step S15. That is, a part of the storage step S16 may be performed in first acquisition step S12, and another part of the storage step S16 may be performed in the third acquisition step S15. When the actuator 20 does not include the second output member 42, the left-right direction adjustment step S22 is omitted.

In the above embodiment, the measurement unit 72a measuring the inclination angle of the emission direction of light based on the signal from the sensor 71 and the information related to the reference vertical vector 76 and the reference horizontal vector 77 has been described as an example. However, when the sensor 71 is the triaxial acceleration sensor that outputs the signal related to the vector indicating the gravity direction, the measurement unit 72a only needs to measure the inclination angle of the emission direction of light based on at least the signal from the sensor 71 and the information related to the reference horizontal vector 77. In this case, the memory 73 may store at least the information related to the reference horizontal vector 77. For example, after obtaining the reference vertical vector 76 from calculation, the measurement unit 72a according to such a modification measures the inclination angle of the emission direction of light similarly to the above embodiment.

Although not illustrated, the measurement unit 72a of the present modification obtains the reference vertical vector 76 from calculation as follows, for example. The measurement unit 72a of the present modification calculates a first intermediate vector perpendicular to the vector 79 and the reference horizontal vector 77 from the outer product of the vector 79 indicating the gravity direction based on the signal from the sensor 71 and the reference horizontal vector 77. Next, the measurement unit 72a of the present modification calculates a second intermediate vector perpendicular to the first intermediate vector and the reference horizontal vector 77 from the outer product of the first intermediate vector and the reference horizontal vector 77. The second intermediate vector is a vector that is included in a plane including the vector 79 and the reference horizontal vector 77 and is perpendicular to the reference horizontal vector 77. The plane including the vector 79 and the reference horizontal vector 77 is the vertical plane parallel to the emission direction of light, and the optical axis 15c is tilted in a vertical plane parallel to this vertical plane. Therefore, the second intermediate vector is the reference vertical vector 76. As described above, the measurement unit 72a of the present modification obtains the reference vertical vector 76 from calculation. According to the measurement unit 72a of the present modification, the amount of information stored in the memory 73 can be reduced. Note that the method for calculating the reference vertical vector 76 and the method for measuring the inclination angle of the emission direction of light in the measurement unit 72a of the present modification are not limited.

In the above embodiment, the vehicle headlamp 1 as the lamp, and the control device 72 that controls the actuator 20 capable of tilting the lamp unit 15 of the vehicle headlamp 1 have been described as examples. However, the lamp is not limited to the vehicle headlamp, and the lamp unit 15 capable of being tilted by the actuator 20 is not limited to the lamp unit of the vehicle headlamp. For example, the lamp may be a head-up display or a projector that projects light onto a windshield.

According to the present invention, the control device for the actuator, the lamp, and the calibration method for the same that can easily adjust the orientation of the emission direction of light in the vertical direction can be provided and used in the fields such as vehicle illumination.

## Claims

1. A control device for an actuator capable of tilting a lamp unit such that an emission direction of light is inclined in a vertical direction, wherein
   the control device receives a signal related to an inclination angle of the lamp unit from a sensor that is tilted together with the lamp unit and outputs the signal, and controls the actuator.

2. A lamp comprising:

   a lamp unit;
   an actuator capable of tilting the lamp unit such that an emission direction of light of the lamp unit is inclined in a vertical direction;
   a sensor that is tilted together with the lamp unit and outputs a signal related to an inclination angle of the lamp unit; and
   a control device that receives the signal and controls the actuator.

3. The lamp according to claim 2, wherein the sensor is a triaxial acceleration sensor.

4. The lamp according to claim 2 or 3, wherein the sensor is attached to the lamp unit.

5. The lamp according to claim 2 or 3, wherein

   the actuator includes an output member that rotates about a rotation axis extending in a horizontal direction perpendicular to the emission direction and to which the lamp unit is attached, and
   the sensor rotates together with the output member.

6. A calibration method for a lamp including a lamp unit, an actuator capable of tilting the lamp unit such that an emission direction of light of the lamp unit is inclined in a vertical direction, a triaxial acceleration sensor that is tilted together with the lamp unit and outputs a signal related to a vector indicating a gravity direction, a memory that stores information related to a reference horizontal vector indicating a horizontal direction parallel to a vertical plane parallel to the emission direction in a coordinate system of the acceleration sensor in a first state where an orientation of the emission direction in the vertical direction is a predetermined direction, and a measurement unit that measures an inclination angle of the emission direction in the vertical plane based on the signal and the information related to the reference horizontal vector,
   the method comprising:

   a first arrangement step of placing the lamp in the first state;
   a first acquisition step of obtaining information related to a first vector indicating a gravity direction in the coordinate system of the acceleration sensor in the first state;
   a second arrangement step of bringing the lamp into a second state where the emission direction is inclined by a predetermined angle in the vertical plane from the first state;
   a second acquisition step of obtaining information related to a second vector indicating a gravity direction in the coordinate system of the acceleration sensor in the second state;
a third acquisition step of obtaining information related to a third vector that is included in a plane including the first vector and the second vector and is perpendicular to the first vector; and
a storage step of causing the memory to store the information related to the third vector as the information related to the reference horizontal vector.

7. The method according to claim 6, wherein

the memory further stores information related to a reference vertical vector indicating a vertical direction in the coordinate system of the acceleration sensor in the first state,
the measurement unit measures the inclination angle of the emission direction based on the information related to the signal, the reference horizontal vector, and the reference vertical vector, and
the storage step causes the memory to store the information related to the first vector as the reference vertical vector.

FIG. 1

FIG. 2

FIG. 3

FIG. 4

FIG. 5

FIG. 6

S1

SENSOR ADJUSTMENT STEP

S11

FIRST ARRANGEMENT STEP

S12

FIRST ACQUISITION STEP

S13

SECOND ARRANGEMENT STEP

S14

SECOND ACQUISITION STEP

S15

THIRD ACQUISITION STEP

S16

STORAGE STEP

S2

LAMP ADJUSTMENT STEP

S21

ATTACHMENT STEP

S22

LEFT-RIGHT DIRECTION ADJUSTMENT STEP

S23

VERTICAL DIRECTION ADJUSTMENT STEP

FIG. 7

15c

1

RA

JG1
JG
JG2

FIG. 8

FIG. 9

## INTERNATIONAL SEARCH REPORT

International application No.

**PCT/JP2024/013897**

### A. CLASSIFICATION OF SUBJECT MATTER

***B60Q 1/08***(2006.01)i; ***B60Q 1/076***(2006.01)i

FI: B60Q1/08; B60Q1/076

According to International Patent Classification (IPC) or to both national classification and IPC

### B. FIELDS SEARCHED

Minimum documentation searched (classification system followed by classification symbols)

B60Q1/08; B60Q1/076

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | EP 2708417 A2 (VALEO SCHALTER UND SENSOREN GMBH) 19 March 2014 (2014-03-19) paragraphs [0019], [0030]-[0038], fig. 1-9 | 1-5 |
| Y | paragraphs [0019], [0030]-[0038], fig. 1-9 | 6-7 |
| Y | JP 2014-108639 A (KOITO MANUFACTURING CO., LTD.) 12 June 2014 (2014-06-12) paragraphs [0016]-[0067], fig. 1-8 | 6-7 |
| A | US 2019/0092223 A1 (ROBERT BOSCH GMBH) 28 March 2019 (2019-03-28) paragraphs [0028]-[0072], fig. 1-6 | 1-7 |
| A | US 2023/0038167 A1 (HYUNDAI MOTOR COMPANY) 09 February 2023 (2023-02-09) paragraphs [0036]-[0080], fig. 1-4 | 1-7 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/013897**

| Patent document cited in search report | | | Publication date (day/month/year) | Patent family member(s) | | | Publication date (day/month/year) |
|---|---|---|---|---|---|---|---|
| EP | 2708417 | A2 | 19 March 2014 | DE | 102012021640 | A1 | |
| JP | 2014-108639 | A | 12 June 2014 | US | 2014/0156150 | A1 | |
| | | | | paragraphs [0023]-[0074], fig. 1-8 | | | |
| | | | | EP | 2738041 | A2 | |
| | | | | CN | 103847617 | A | |
| US | 2019/0092223 | A1 | 28 March 2019 | DE | 102017216945 | A1 | |
| | | | | CN | 109552160 | A | |
| US | 2023/0038167 | A1 | 09 February 2023 | KR | 10-2023-0021487 | A | |
| | | | | CN | 115703394 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5947947 B